# FASCICULE DE BREVET EUROPEEN

(11) **EP 1 115 605 B1**
(45) Date de publication et mention de la délivrance du brevet: **14.08.2002**
(21) Numéro de dépôt: 99942990.5
(22) Date de dépôt: 16.09.1999
(51) Int. Cl.: B62D 25/14, B62D 29/00, B62D 21/09

(54) **STRUCTURE DE SUPPORT CREUSE DE FORME ALLONGEE COMPORTANT UN FLASQUE TRANSVERSAL A CHACUNE DE SES EXTREMITES**
LANGGESTRECKTE TRAGSTRUKTUR MIT HOHLPROFILTRÄGER MIT EINEM QUERFLANSCH AN BEIDEN ENDFLÄCHEN
HOLLOW ELONGATED SUPPORT STRUCTURE COMPRISING A TRANSVERSE FLANGE AT EACH OF ITS ENDS

(30) Priorité: 21.09.1998 FR 9811749
(43) Date de publication de la demande: 18.07.2001
(73) Titulaire: Vallourec Composants Automobiles Hautmont, 59330 Hautmont (FR)
(72) Inventeur: DECOME, Stéphane, F-59620 Aulnoye-Aymeries (FR)
(74) Mandataire: Lewitter, Herbert
(86) Numéro de dépôt international: FR9902210
(87) Numéro de publication internationale: WO0017034

(56) Documents cités:
- FR-A- 2 757 473
- GB-A- 2 067 478
- US-A- 4 863 214
- US-A- 5 755 486

## Description

La présente invention a pour objet une structure de support creuse de forme allongée destinée en particulier à supporter les équipements d'un véhicule automobile placés au droit de sa planche de bord.

Une telle structure de support est bien connue ; habituellement dénommée traverse, elle est métallique et disposée transversalement, par rapport à l'axe longitudinal du véhicule, à l'avant de l'habitacle du véhicule et permet de supporter les équipements tels que la colonne de direction, l'appareil de chauffage ou de climatisation, le (ou les) sac(s) gonflables, la planche de bord elle-même, ainsi que d'autres équipements.

Les traverses sont généralement fixées à l'ossature de la carrosserie du véhicule au voisinage de leurs extrémités. Pour ce faire, des éléments sont rapportés à leurs extrémités, notamment par soudage, comme le montrent par exemple les documents EP-A-694 465 ou US-A-4 826 235 ou US-A-5 387 023. Une telle façon de procéder est coûteuse.

Il a été également proposé de solidariser à chaque bout de la structure de poutre un flasque disposé transversalement pour la fixation et/ou le maintien de la planche de bord elle-même, le contour desdits flasques étant adapté à la section de ladite planche, voire l'habillage de celle-ci.

Jusqu'ici, de tels flasques sont solidarisés par soudage à la structure de support. Outre le fait que cette opération est difficile et onéreuse, elle ne facilite pas le stockage ni le transport desdites structures ainsi équipées jusqu'à l'aire de montage des véhicules, d'autant plus que lesdits flasques peuvent être de grandes dimensions ; de plus, ceux-ci sont fragiles et peuvent se déformer lors du stockage ou du transport.

La présente invention a pour objet une structure de support creuse de forme allongée destinée à supporter les équipements d'un véhicule automobile placés au droit de sa planche de bord, les extrémités de ladite structure comportant un flasque d'extrémité disposé transversalement pour la fixation et/ou le maintien de la planche de bord elle-même, et/ou pour la fixation de la structure de support creuse à la carrosserie du véhicule, ladite structure de support étant à un prix de revient inférieur à celui des structures de support connues jusqu'ici (FR-A-2757473).

Selon l'invention, une structure de support du genre ci-dessus est caractérisée par le fait que chaque flasque d'extrémité est solidaire d'un bouchon en matière plastique introduit dans ladite structure de support, aux extrémités de celle-ci à laquelle il est solidarisé.

Avantageusement, le bouchon présente une semelle d'où émerge au moins un bloc, ladite semelle débordant par rapport au bloc en sorte que périphériquement est défini un rebord transversal.

De préférence, lorsque la section de la structure délimite plusieurs espaces fermés, de la semelle émergent plusieurs blocs dont chacun est adapté à être monté dans l'un desdits espaces.

Avantageusement, le bouchon est adapté à être introduit à force dans ladite structure.

Lorsque la structure présente des ouvertures transversalement en regard pour le passage d'organes de fixation, pour fixation de la structure à la carrosserie ou du bouchon à la structure, le bouchon présente un passage traversant aligné avec lesdites ouvertures.

De préférence, les ouvertures et le passage traversant ont une section de forme oblongue.

Avantageusement, le passage traversant est bordé par un tube métallique.

De préférence, le bloc est surmoulé autour du tube métallique.

De préférence, la surface intérieure d'une extrémité, ou des deux, de la structure de support creuse, destinée(s) à recevoir un bouchon est munie de moyens permettant de faciliter la mise en correspondance du, ou des, passage(s) traversant(s) avec lesdites ouvertures.

Avantageusement, la surface intérieure des extrémités de la structure n'est pas de révolution.

De préférence, la surface intérieure d'une extrémité, ou des deux, de la structure de support creuse est une surface de révolution et comporte en bout une encoche apte à coopérer avec un relief ménagé à la surface extérieure du, ou des, bouchon(s).

Avantageusement, la solidarisation du bouchon au flasque d'extrémité est réalisée au moyen d'un étrier présentant des retours par lesquels il est assujetti au flasque d'extrémité, par exemple par soudage.

De préférence, le bloc du bouchon présente une rainure dans laquelle prend place l'étrier en chevauchant le bloc.

Avantageusement, le bloc du bouchon est surmoulé autour de l'étrier.

De préférence, l'étrier est en forme générale de U et le passage traversant du bloc du bouchon s'étend parallèlement aux ailes de l'étrier.

Avantageusement, l'étrier est en forme générale de U et le passage traversant du bloc du bouchon s'étend perpendiculairement aux ailes de l'étrier qui sont munies d'ouvertures pour le débouché du passage traversant.

En variante, le flasque d'extrémité présente un ancrage sur lequel est surmoulé le bloc du bouchon ; l'ancrage est obtenu par découpe et emboutissage ; l'ancrage est obtenu par découpe et pliage de pattes.

Avantageusement, les ouvertures de la structure sont obtenues par hydroformage et le bloc présente une échancrure latérale permettant d'éviter, lors du montage du bouchon dans la structure, la languette résultant de l'opération d'hydroformage.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue de face en élévation d'une structure de support selon l'invention ;
- la figure 2 est une vue de dessus de la structure de support de la figure 1 ;
- la figure 3 est une vue en coupe selon III-III de la figure 1 de la structure de support sans flasques ;
- la figure 4 est une vue en coupe selon IV-IV de la figure 1 de la structure de support sans flasques ;
- la figure 5 est une vue partielle en élévation d'un flasque équipé d'un bouchon que comporte la structure de support des figures 1 à 4 ;
- la figure 6 est une vue selon la flèche VI de la figure 5 ;
- la figure 7 est une vue en coupe selon 111-111 de la figure 1 ;
- la figure 8 est une vue partielle en élévation d'un flasque équipé d'un autre bouchon que comporte la structure de support des figures 1 à 4 ;
- la figure 9 est une vue selon la flèche IX de la figure 8 ;
- la figure 10 est une vue en coupe selon IV-IV de la figure 1 ;
- la figure 11 est une vue en perspective d'un flasque d'extrémité équipé d'un autre bouchon
- la figure 12 est une vue partielle en plan selon la flèche XII du bouchon de la figure 11, à plus grande échelle ;
- la figure 13 est une vue selon la flèche XIII de la figure 12 ;
- la figure 14 est une vue partiellement en coupe montrant une variante du bouchon des figures 1 à 13 ;
- la figure 15 est une vue selon la flèche XV de la figure 14, le bloc étant représenté seul ;
- la figure 16 est une vue en coupe selon XVI-XVI de la figure 15 ;
- les figures 17 et 18 sont analogues aux figures 15 et 16, et représentent une variante ;
- les figures 19 et 20 représentent en perspective chacune une variante de flasque d'extrémité muni d'un ancrage adapté à être surmoulé par un bloc en matière plastique.

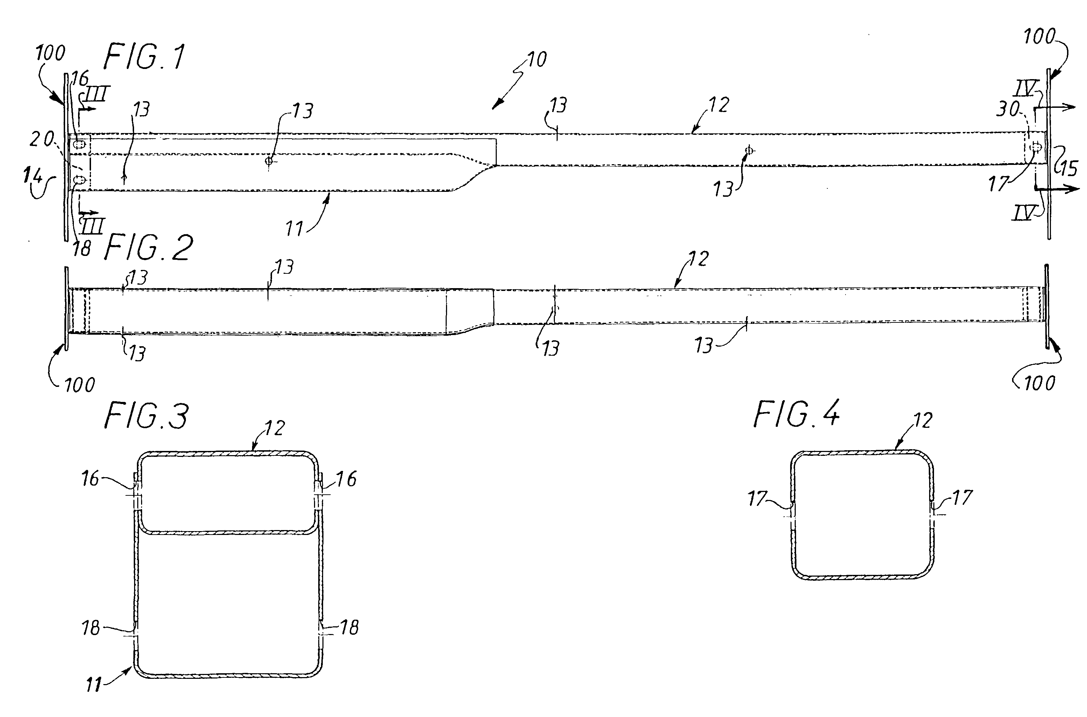

En se reportant aux figures 1 à 4, on voit que la structure de support 10 est ici réalisée par l'assemblage d'un tube 12 de section ici globalement rectangulaire s'étendant sur toute la longueur de la structure depuis son extrémité 14 dite conducteur jusqu'à son autre extrémité 15 dite passager ; depuis l'extrémité conducteur 14 de la structure 10, le tube 12 a une section rectangulaire à bords arrondis, sur presque la moitié de la longueur de la structure 10, puis, au delà d'une zone de raccordement et jusqu'à l'extrémité passager 15, sa section est plus grande, pratiquement de forme carrée. Un tel tube est par exemple commodément obtenu par hydroformage à périmètre constant d'un tube cylindrique. Un tel procédé d'hydroformage est notamment décrit dans le document EP-A-0 294 034.

Du côté de l'extrémité conducteur 14, une poutre 11 en U est solidarisée par soudage au tube 12 qui est engagé partiellement entre les ailes du U de la poutre 11 en U, laquelle s'étend, depuis l'extrémité conducteur 14, le long de la partie du tube 13 de plus faible section, puis se raccorde à la partie de celui-ci de plus grande section dont la section est toutefois plus petite que celle englobée par la poutre 11. On obtient ainsi une structure de support 10 de grande inertie y compris dans la zone proche de l'extrémité conducteur qui supporte la colonne de direction. Les repères 13 montrent des exemples d'emplacements destinés à la fixation des équipements placés au droit de la planche de bord ; ce sont généralement des trous avec ou sans collet, à bord lisse ou taraudés.

A chaque extrémité de la structure de support 10, celle-ci présente un (ou des) couple(s) d'ouvertures transversalement en regard pour le passage d'organes de fixation, tels que des vis traversantes, pour fixer la structure de support 10 à l'ossature de la carrosserie du véhicule ; du côté de l'extrémité conducteur 14, deux couples d'ouvertures sont prévus, un couple d'ouvertures 16 affectant les parois de la poutre 11 et du tube 12, et un couple d'ouvertures 18 affectant les parois de la poutre 11 seule ; du côté de l'extrémité passager 15, un seul couple d'ouvertures 17 est prévu; avantageusement, toutes ces ouvertures sont de forme oblongue pour tenir compte des dispersions éventuelles de la carrosserie.

La structure de support 10 selon l'invention comporte à chacune de ses extrémités un flasque 100 muni d'un bouchon en matière plastique.

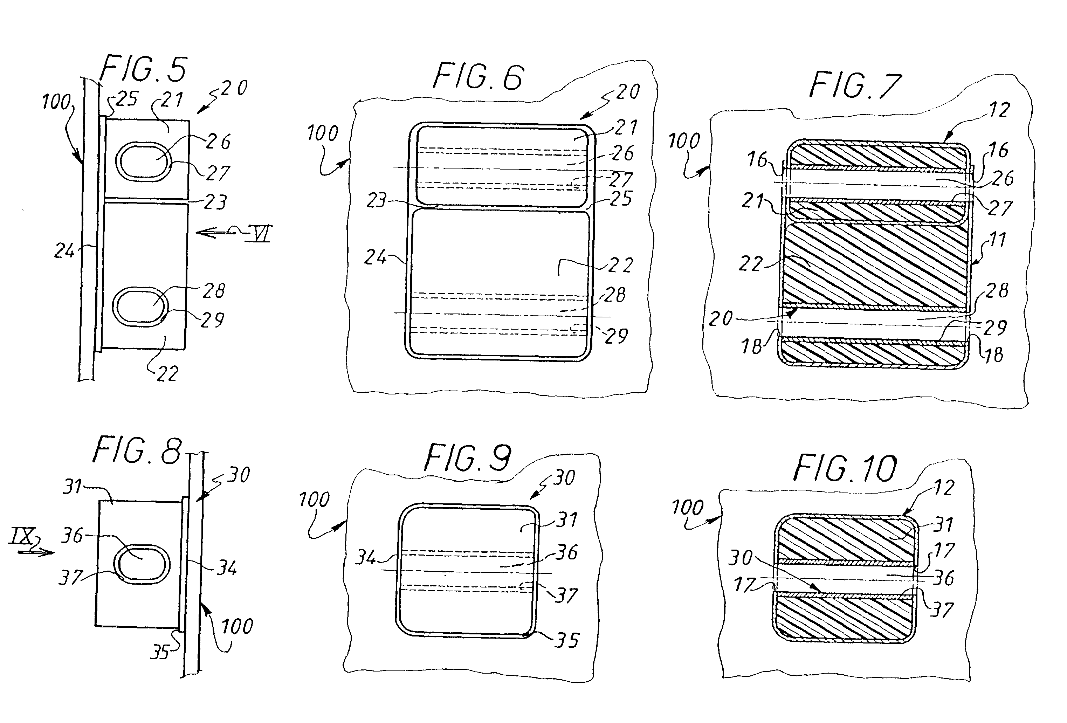

Les figures 5 et 6 montrent le bouchon seul qui correspond à l'extrémité conducteur 14 de la structure de support 10 ; ce bouchon référencé 20 présente une semelle 24 plane d'où émergent ici deux blocs 21 et 22 séparés par un interstice 23.

Ici, chaque bloc 21, 22 présente un passage traversant, respectivement 26, 28, dont la section correspond à celles des ouvertures 16, 18 ; ici, chaque passage 26, 28 est bordé par un tube oblong métallique 27, 29 autour duquel les blocs 21 et 22 sont surmoulés. Le bloc 21 est adapté à être monté à force dans le tube 12 et le bloc 22 dans l'espace fermé de la poutre 11 limité par le tube 12 ; la réalisation de godrons non représentés sur la surface périphérique des blocs 21, 22 permet à la surface périphérique des blocs 21, 22 de légèrement se déformer pour s'adapter aux variations dimensionnelles de ces blocs ; le tube oblong 27 a une longueur qui correspond à la distance séparant intérieurement les parois du tube 12 définissant les ouvertures 16, et le tube oblong 29 a une longueur qui correspond à la distance séparant intérieurement les ailes de la poutre 11 en U ; les deux blocs 21, 22 ont bien entendu en commun la semelle 24 qui les relie, l'ensemble étant obtenu d'une seule pièce par moulage ; l'interstice 23 a une largeur qui correspond à l'épaisseur de la paroi du tube 12, située à l'intérieur de la poutre 11, qu'il est adapté à recevoir. La semelle 24 déborde par rapport aux blocs 21, 22 en sorte que périphériquement est défini un rebord transversal 25.

Ainsi, comme on le comprend aisément, lorsque le bouchon est monté à force dans la structure de poutre 10, il en est solidaire et fait partie intégrante de ladite structure, sans nécessiter de collage ou soudage ; lorsqu'il est en place, comme le montre la figure 7, les passages 26, 28 sont parfaitement au droit des ouvertures transversalement en regard 16, 18 respectivement, le bouchon 20 étant positionné dans la structure de support 10 par la venue en butée, contre le bord d'extrémité de la structure de support 10, du rebord 25 défini par la semelle 24 autour des blocs 21, 22 ; il est à noter que les extrémités des tubes oblongs 27, 29 sont alors au droit, et quasiment au contact, des parois du tube 12 et de la poutre 11 portant les ouvertures : dès lors, ces tubes oblongs 27, 29 jouent le rôle d'entretoises empêchant ces parois de flamber lors du serrage des organes de fixation de la structure du support 10 traversant les passages 26, 28 ; grâce à l'invention, les tubes oblongs sont parfaitement positionnés et ce de manière économique, sans qu'il soit nécessaire d'utiliser un gabarit ; par ailleurs, les passages 26, 28 guident les organes de fixation lors du montage de la structure de support 10 sur l'ossature de la carrosserie.

Les figures 8 à 10 sont analogues respectivement aux figures 5 à 7 qui viennent d'être décrites mais correspondent au bouchon 30 adapté à l'extrémité passager 15 de la structure de support 10 ; le bouchon 30, toutes choses égales par ailleurs par rapport au bouchon 20, ne comporte qu'un bloc 31 en matière plastique issu d'une semelle 34 définissant un rebord 35 autour de celui-ci, et qu'un seul passage 36 bordé par un tube oblong 37 ; le bloc 31 est adapté à la section du tube 12 au droit de l'extrémité passager 15.

Dans les exemples qui viennent d'être décrits, les passages 26, 28,36 sont bordés par des tubes oblongs 27,29,37 respectivement ; selon une variante non représentée, les tubes oblongs sont supprimés ; on peut utiliser, comme matière plastique pour les bouchons, du polypropylène, du polychlorure de vinyle, du polyéthylène.

Les bouchons décrits ci-dessus sont liés aux flasques d'extrémité 100 par tout moyen approprié.

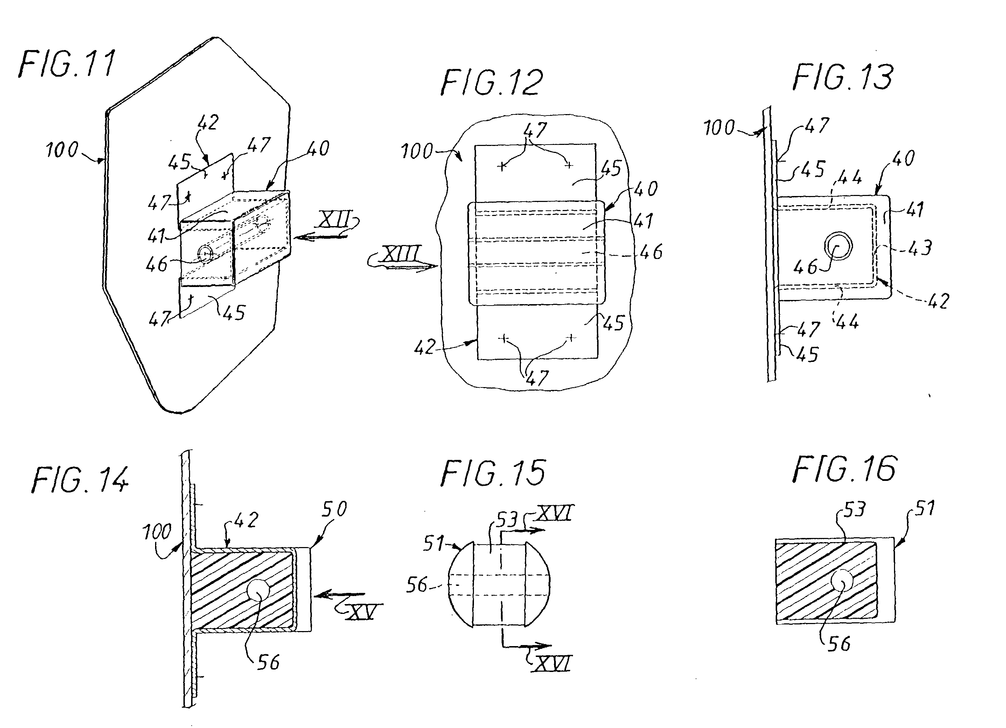

Selon les figures 11 à 13, le bouchon 40, muni d'un passage traversant 46, ici de section circulaire, est constitué d'un bloc 41 en matière plastique surmoulée autour d'un étrier métallique 42 en forme générale de U ayant une âme 43 et deux ailes 44 noyées dans le bloc 41 ; les ailes 44 de l'étrier 42 se prolongent à l'extérieur du bloc 41 selon des retours 45 s'étendant ici parallèlement à l'âme 43 et situés dans un même plan en s'éloignant l'un de l'autre ; c'est par les retours 45 que le bouchon 40 est fixé sur le flasque 100, par exemple par des points de soudage 47.

Ainsi, le bouchon 40, équipé du flasque 100, peut être introduit dans la structure de support 10 sur l'aire de montage des véhicules juste avant la fixation de celle-ci sur l'ossature de carrosserie et les inconvénients ci-dessus sont évités.

Les figures 14, 15 et 16 montrent un bouchon 50 analogue au bouchon 40 décrit ci-dessus, mais ici l'étrier 42 n'est pas surmoulé par le bloc 51 en matière plastique ; celui-ci porte à la périphérie de trois de ses côtés une rainure 53 dont la largeur correspond à celle de l'étrier 42 ; le U de l'étrier 42 prend place dans la rainure 53, chevauchant ainsi le bloc 51, puis est fixé au flasque 100 ; grâce à la rainure 53, le bloc 51 est maintenu latéralement; on notera également qu'ici la section transversale du bloc 51 en matière plastique est de forme globalement circulaire, le bouchon étant alors adapté à équiper une structure de support 10 à section tubulaire ; on voit que l'invention s'applique à toute sorte de structure, quelle que soit sa section.

Dans les exemples décrits aux figures 11 à 16, le passage traversant 46, ou 56, s'étend parallèlement aux ailes de l'étrier 53 ; selon une variante non représentée, le passage traversant s'étend perpendiculairement aux ailes de l'étrier, c'est-à-dire parallèlement à l'âme dudit étrier, auquel cas les ailes de l'étrier sont munies d'ouvertures pour le débouché du passage traversant 46, 56.

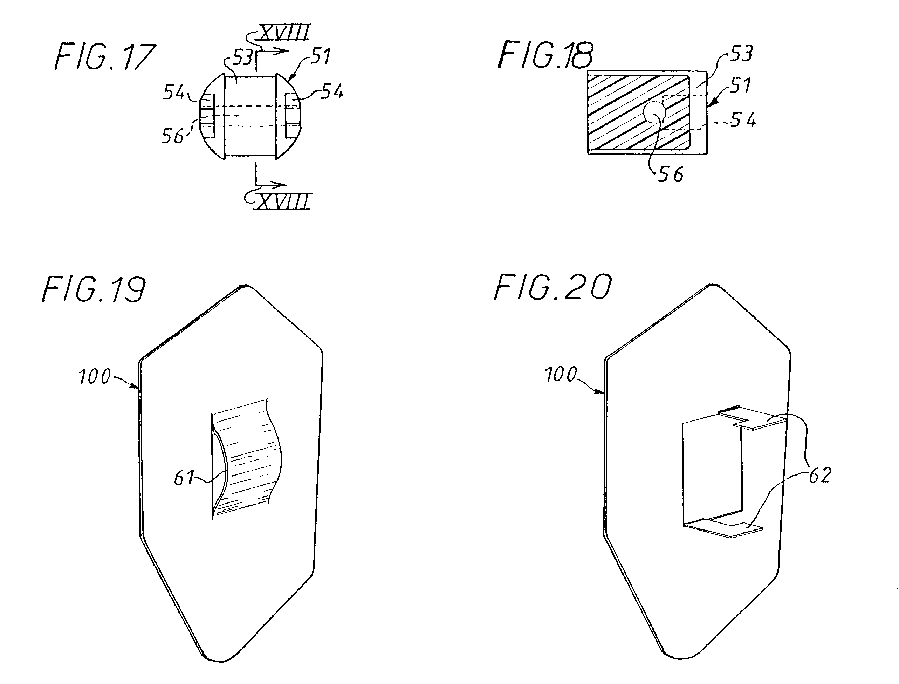

Les structures de support, telles que la structure de support 10, peuvent être obtenues par hydroformage ; il est possible également de réaliser par ce procédé les ouvertures telles que 16, 17 ou 18 : dans ce cas, comme on le sait, la matière déplacée pour réaliser ces ouvertures ne se détache pas de la structure mais y reste accrochée à la manière d'une languette s'étendant à l'intérieur perpendiculairement à la paroi munie de l'ouverture correspondante ; dans ce cas, il est avantageux de prévoir, dans le bloc en matière plastique, une échancrure latérale 54 visible sur les figures 17, 18 permettant d'éviter ces languettes lors du montage du bouchon dans la structure support.

La figure 19 montre un flasque d'extrémité 100 dans lequel on a ménagé, par découpe et emboutissage, un ancrage 61 sur lequel on vient surmouler le bloc en matière plastique, ce qui permet d'éviter l'utilisation d'un cavalier.

Selon la figure 20, un ancrage pour le bloc en matière plastique est réalisé par deux pattes 62 découpées dans le flasque 100 puis pliées.

Dans tout ce qui précède, les bouchons sont avantageusement introduits à force aux extrémités de la structure de support ; des résultats analogues sont obtenus en introduisant simplement les bouchons aux extrémités de la structure de support et en les y maintenant provisoirement à l'aide de moyens de maintien tels que vis, goupilles ou autres, la solidarisation définitive du bouchon et de la structure étant réalisée par la fixation de celle-ci sur l'ossature de carrosserie ; bien entendu, dans ce cas, les bouchons et la structure de support sont adaptés à recevoir lesdits moyens de maintien.

## Revendications

1. Structure de support creuse de forme allongée destinée à supporter les équipements d'un véhicule automobile placés au droit de sa planche de bord, les extrémités de ladite structure (10) comportant un flasque d'extrémité (100) disposé transversalement pour la fixation et/ou le maintien de la planche de bord elle-même, et/ou pour la fixation de la structure (10) de support creuse à la carrosserie du véhicule, **caractérisée par le fait que** chaque flasque d'extrémité (100) est solidaire d'un bouchon (20,30,40,50) en matière plastique introduit dans ladite structure de support (10), aux extrémités (14,15) de celle-ci à laquelle il est solidarisé.

2. Structure selon la revendication 1, **caractérisée par le fait que** le bouchon (20,30,40,50) présente une semelle (24,34) d'où émerge au moins un bloc (21,22,31,41,51), ladite semelle (24,34) débordant par rapport au bloc (21,22,31) en sorte que périphériquement est défini un rebord transversal (25).

3. Structure selon la revendication 2, dont la section délimite plusieurs espaces fermés, **caractérisée par le fait que** de la semelle (24) émergent plusieurs blocs (21, 22) dont chacun est adapté à être monté dans l'un desdits espaces.

4. Structure selon l'une des revendications 1 à 3, **caractérisée par le fait que** le bouchon (20,30,40,50) est adapté à être introduit à force dans ladite structure (10).

5. Structure selon l'une des revendications 1 à 4, **caractérisée par le fait que** ladite structure (10) comporte des ouvertures (16, 17, 18) transversalement en regard pour le passage d'organes de fixation et ledit bouchon (20,30,40,50) présente un passage traversant (26,28,36,46,56) aligné avec lesdites ouvertures (16,17,18).

6. Structure selon la revendication 5, **caractérisée par le fait que** les ouvertures (16,17,18) et le passage traversant (26,28,36,46,56) ont une section de forme oblongue.

7. Structure selon l'une des revendications 5 ou 6, **caractérisée par le fait que** le passage traversant (26,28,36,46,56) est bordé par un tube métallique (27,29,37).

8. Structure selon la revendication 7, **caractérisée par le fait que** le bouchon (20,30,40) est surmoulé autour du tube métallique (27,29,37).

9. Structure selon l'une des revendications 1 à 8, **caractérisée par le fait que** la surface intérieure d'une extrémité (14,15), ou des deux, de la structure (10) de support creuse, destinée(s) à recevoir un bouchon (20,30,40,50) est munie de moyens permettant de faciliter la mise en correspondance du, ou des, passage(s) traversant(s) (26,28,36,46,56) avec lesdites ouvertures (16,17,18).

10. Structure selon la revendication 9, **caractérisée par le fait que** la surface intérieure des extrémités (14, 15) de la structure (10) n'est pas de révolution.

11. Structure selon la revendication 9, **caractérisée par le fait que** la surface intérieure d'une extrémité (14,15), ou des deux, de la structure (10) de support creuse est une surface de révolution et comporte en bout une encoche apte à coopérer avec un relief ménagé à la surface extérieure du, ou des, bouchon(s).

12. Structure selon l'une des revendications 1 à 11, **caractérisée par le fait que** la solidarisation du bouchon (40,50) au flasque d'extrémité (100) est réalisée au moyen d'un étrier (42) présentant des retours (45) par lesquels il est assujetti au flasque d'extrémité (100), par exemple par soudage.

13. Structure selon la revendication 12, **caractérisée par le fait que** le bouchon (50) est constitué d'un bloc (51) présentant une rainure (53) dans laquelle prend place l'étrier (42) en chevauchant le bloc (51).

14. Structure selon la revendication 12, **caractérisée par le fait que** le bouchon (40) est constitué d'un bloc (41) surmoulé autour de l'étrier (42).

15. Structure selon l'une des revendications 12 à 14, rattachées à l'une des revendications 5 à 11, **caractérisée par le fait que** l'étrier (42) est en forme générale de U et le passage traversant (46,56) du bouchon (40,50) s'étend parallèlement aux ailes de l'étrier (42).

16. Structure selon l'une des revendications 12 à 14, rattachées à l'une des revendications 5 à 11, **caractérisée par le fait que** l'étrier (42) est en forme générale de U et le passage traversant du bouchon s'étend perpendiculairement aux ailes de l'étrier qui sont munies d'ouvertures pour le débouché du passage traversant.

17. Structure selon l'une des revendications 1 à 11, **caractérisée par le fait que** le flasque d'extrémité (100) présente un ancrage sur lequel est surmoulé le bouchon.

18. Structure selon la revendication 17, **caractérisée par le fait que** l'ancrage (61) est obtenu par découpe et emboutissage.

19. Structure selon la revendication 17, **caractérisée par le fait que** l'ancrage est obtenu par découpe et pliage de pattes (62).

20. Structure selon les revendications 5 et 13 prises conjointement, **caractérisée par le fait que** les ouvertures (16,17,18) de la structure (10) sont obtenues par hydroformage et le bloc (51) présente une échancrure latérale (54) permettant d'éviter, lors du montage du bouchon dans la structure, la languette résultant de l'opération d'hydroformage.

## Claims

1. An elongate hollow support structure intended to support the equipment units of an automobile vehicle in the vicinity of its dashboard, the ends of said structure (10) including a transverse end flange (100) for fixing and/or retaining the dashboard itself and/or for fixing the hollow support structure (10) to the body of the vehicle, **characterized in that** each end flange (100) is fastened to a plastics material plug (20, 30, 40, 50) inserted into said support structure (10) at the ends (14, 15) of this structure to which it is fastened.

2. A structure according to claim 1, **characterized in that** the plug (20, 30, 40, 50) includes a baseplate (24, 34) from which protrudes at least one block (21, 22, 31, 41, 51), said baseplate (24, 34) projecting relative to the block (21, 22, 31) to define a peripheral transverse rim (25).

3. A structure according to claim 2, the section of which delimits a plurality of closed spaces, **characterized in that** a plurality of blocks (21, 22) protrude from the baseplate (24) and each of said blocks is adapted to be mounted in one of said spaces.

4. A structure according to any of claims 1 to 3, **characterized in that** the plug (20, 30, 40, 50) is adapted to be force-fitted into said structure (10).

5. A structure according to any of claims 1 to 4, **characterized in that** said structure (10) includes transversely facing openings (16, 17, 18) for fixing members to pass through and said plug (20, 30, 40, 50) has a passage (26, 28, 36, 46, 56) through it aligned with said openings (16, 17, 18).

6. A structure according to claim 5, **characterized in that** the openings (16, 17, 18) and the passage (26, 28, 36, 46, 56) have an oblong section.

7. A structure according to either claim 5 or claim 6, **characterized in that** the passage (26, 28, 36, 46, 56) is bordered by a metal tube (27, 29, 37).

8. A structure according to claim 7, **characterized in that** the plug (20, 30, 40) is molded over the metal tube (27, 29, 37).

9. A structure according to any of claims 1 to 8, **characterized in that** the inside surface of one or both ends (14, 15) of the hollow support structure (10) adapted to receive a plug (20, 30, 40, 50) is provided with means for facilitating aligning the passage(s) (26, 28, 36, 46, 56) with said openings (16, 17, 18).

10. A structure according to claim 9, **characterized in that** the inside surface of the ends (14, 15) of the structure (10) is not a surface of revolution.

11. A structure according to claim 9, **characterized in that** the inside surface of one or both ends (14, 15) of the hollow support structure (10) is a surface of revolution and has a notch at the end adapted to cooperate with a raised portion on the outside surface of the plug(s)

12. A structure according to any of claims 1 to 11, **characterized in that** the plug (40, 50) is fastened to the end flange (100) by means of a bracket (42) having rims (45) attached, for example welded, to the end flange (100).

13. A structure according to claim 12, **characterized in that** the plug (50) is a block (51) which has a groove (53) in which the bracket (42) locates, straddling the block (51).

14. A structure according to claim 12, **characterized in that** the plug (40) is a block (41) molded onto the bracket (42).

15. A structure according to any of claims 12 to 14, when dependent on any of claims 5 to 11, **characterized in that** the bracket (42) is generally U-shaped and the passage (46, 56) in the plug (40, 50) is parallel to the flanges of the bracket (42).

16. A structure according to any of claims 12 to 14, when dependent on any of claims 5 to 11, **characterized in that** the bracket (42) is generally U-shaped and the passage in the plug is perpendicular to the flanges of the bracket which are provided with openings aligned with the end of the passage.

17. A structure according to any of claims 1 to 11, **characterized in that** the end flange (100) has an anchorage over which the plug is molded.

18. A structure according to claim 17, **characterized in that** the anchorage (61) is obtained by cutting and pressing.

19. A structure according to claim 17, **characterized in that** the anchorage is obtained by cutting and bending lugs (62).

20. A structure according to claim 5 in conjunction with claim 13, **characterized in that** the openings (16, 17, 18) of the structure (10) are obtained by hydroforming and the block (51) has a lateral notch (54) for avoiding a tongue resulting from hydroforming when mounting the plug in the structure.

## Patentansprüche

1. Hohle, längliche Tragkonstruktion, die dazu bestimmt ist, die Ausrüstungen eines Kraftfahrzeugs zu tragen, die im Bereich seines Armaturenbretts vorgesehen sind, wobei die Enden der Konstruktion (10) einen quer angeordneten Endflansch (100) zur Befestigung und/oder zum Halten des Armaturenbretts selbst und/oder zur Befestigung der hohlen Tragkonstruktion (10) an der Fahrzeugkarosserie aufweisen, **dadurch gekennzeichnet, dass** jeder Endflansch (100) fest mit einem Stopfen (20,30,40,50) aus Kunststoff verbunden ist, der an den Enden (14,15) der Tragkonstruktion (10) in diese eingeführt ist, mit der er fest verbunden ist.

2. Konstruktion nach Anspruch 1, **dadurch gekennzeichnet, dass** der Stopfen (20,30,40,50) eine Platte (24, 34) aufweist, von der mindestens ein Block (21,22,31,41,51) ausgeht, welche Platte (24,34) bezogen auf den Block (21, 22,31) übersteht, sodass in Umfangsrichtung eine Querleiste (25) entsteht.

3. Konstruktion nach Anspruch 2, **dadurch gekennzeichnet**, deren Querschnitt mehrere geschlossene Räume begrenzt, **dadurch gekennzeichnet, dass** von der Platte (24) mehrere Blöcke (21,22) ausgehen, die jeweils geeignet sind, in einen dieser Räume montiert zu werden.

4. Konstruktion nach einem der Ansprüche 1 bis 3, **dadurch gekennzeichnet, dass** der Stopfen (20,30,40,50) geeignet ist, mit Druck in die Konstruktion (10) eingeführt zu werden.

5. Konstruktion nach einem der Ansprüche 1 bis 4, **dadurch gekennzeichnet, dass** die Konstruktion (10) Öffnungen (16,17,18) für die Durchführung von Befestigungseinrichtungen aufweist, die einander transversal gegenüber liegen, und dass der Stopfen (20,30,40,50) eine durchgehende Durchführung (26,28,36,46,56) aufweist, die auf die Öffnungen (16,17,18) gefluchtet ist.

6. Konstruktion nach Anspruch 5, **dadurch gekennzeichnet, dass** die Öffnungen (16,17,18) und die durchgehende Durchführung (26,28,36,46,56) einen länglichen Querschnitt aufweisen.

7. Konstruktion nach einem der Ansprüche 5 oder 6, **dadurch gekennzeichnet, dass** die durchgehende Durchführung (26,28,36,46,56) von einem Metallrohr (27,29,37) gesäumt ist.

8. Konstruktion nach Anspruch 7, **dadurch gekennzeichnet, dass** der Stopfen (20,30,40) um ein Metallrohr (27,29,37) herum angeformt wird.

9. Konstruktion nach einem der Ansprüche 1 bis 8, **dadurch gekennzeichnet, dass** die Innenfläche eines Endes (14,15) oder beider Enden der hohlen Tragkonstruktion (10), das/die dazu bestimmt ist/sind, einen Stopfen (20,30, 40,50) aufzunehmen, mit Mitteln versehen ist, die eine leichtere Verbindung zwischen der/den durchgehenden Durchführung/en (26,28,36,46,56) und den Öffnungen (16,17,18) ermöglichen.

10. Konstruktion nach Anspruch 9, **dadurch gekennzeichnet, dass** die Innenfläche der Enden (14,15) der Konstruktion (10) keine drehsymmetrische Fläche ist.

11. Konstruktion nach Anspruch 9, **dadurch gekennzeichnet, dass** die Innenfläche eines Endes (14,15) oder beider Enden der hohlen Tragkonstruktion eine drehsymmetrische Fläche ist und am Ende eine Einkerbung aufweist, die geeignet ist. mit einer Erhöhung zusammenzuwirken, die an der Außenfläche des oder der Stopfen/s vorgesehen ist.

12. Konstruktion nach einem der Ansprüche 1 bis 11, **dadurch gekennzeichnet, dass** die feste Verbindung des Stopfens (40, 50) mit dem Endflansch (100) mittels eines Bügels (42) gewährleistet ist, der Umbiegungen (45) aufweist, mit denen er fest am Endflansch (100) befestigt ist, beispielsweise durch Schweißen.

13. Konstruktion nach Anspruch 12, **dadurch gekennzeichnet, dass** der Stopfen (50) aus einem Block (51) besteht, der eine Nut (53) aufweist, in der der Bügel (42) Platz findet und dabei den Block überlappt (51).

14. Konstruktion nach Anspruch 12, **dadurch gekennzeichnet, dass** der Stopfen (40) aus einem Block (41) besteht, der um den Bügel (42) herum angebracht ist.

15. Konstruktion nach einem der Ansprüche 12 bis 14, in Verbindung mit einem der Ansprüche 5 bis 11, **dadurch gekennzeichnet, dass** der Bügel (42) insgesamt U-förmig ist und dass sich die durchgehende Durchführung (46,56) des Stopfens (40,50) parallel zu den Seitenarmen des Bügels (42) erstreckt.

16. Konstruktion nach einem der Ansprüche 12 bis 14, in Verbindung mit einem der Ansprüche 5 bis 11, **dadurch gekennzeichnet, dass** der Bügel (42) im Wesentlichen U-förmig ist und sich die durchgehende Durchführung des Stopfens quer zu den Seitenarmen des Bügels erstreckt, die mit Öffnungen für die Einmündung der durchgehenden Durchführung versehen sind.

17. Konstruktion nach einem der Ansprüche 1 bis 11, **dadurch gekennzeichnet, dass** der Endflansch (100) eine Verankerung umfasst, über die der Stopfen angeformt wird.

18. Konstruktion nach Anspruch 17, **dadurch gekennzeichnet, dass** die Verankerung (61) durch Ausschneiden und Ziehen erhalten wird.

19. Konstruktion nach Anspruch 17, **dadurch gekennzeichnet, dass** die Verankerung (61) durch Ausschneiden und Biegen von Klauen (62) erhalten wird.

20. Konstruktion nach den zusammen genommenen Ansprüchen 5 und 13, **dadurch gekennzeichnet, dass** die Öffnungen (16,17,8) der Konstruktion (10) durch Hydroforming erhalten werden und der Block (51) eine seitliche Aussparung (54) aufweist, die beim Einbau des Stopfens in die Konstruktion die durch den Hydroformingvorgang entstehende Zunge verhindert.
